# Europäisches Patentamt
## European Patent Office
## Office européen des brevets

(19)

(11) Veröffentlichungsnummer: **0 195 914**
**B1**

(12)

# EUROPÄISCHE PATENTSCHRIFT

(45) Veröffentlichungstag der Patentschrift:
08.06.88

(51) Int. Cl.⁴: **F 16 L 33/12, F 16 L 37/20**

(21) Anmeldenummer: **86101795.2**

(22) Anmeldetag: **13.02.86**

(54) Schlauch- oder Rohrkupplung.

(30) Priorität: **28.03.85 DE 3511289**

(43) Veröffentlichungstag der Anmeldung:
**01.10.86 Patentblatt 86/40**

(45) Bekanntmachung des Hinweises auf die Patenterteilung:
**08.06.88 Patentblatt 88/23**

(84) Benannte Vertragsstaaten:
**AT FR GB IT SE**

(56) Entgegenhaltungen:
**DE-B-2 523 338**
**DE-U-8 330 160**

(73) Patentinhaber: **Weinhold, Karl Dipl.- Ing. (FH), Im Jagdfeld 43, D-4040 Neuss (DE)**

(72) Erfinder: **Weinhold, Karl Dipl.- Ing. (FH), Im Jagdfeld 43, D-4040 Neuss (DE)**

(74) Vertreter: **Patentanwaltsbüro Cohausz & Florack, Postfach 14 01 47, D-4000 Düsseldorf 1 (DE)**

EP 0 195 914 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft eine Schlauch- oder Rohrkupplung mit den Merkmalen des Oberbegriffs des Anspruchs 1.

Bei einer aus der DE-B-25 23 338 bekannten Kupplung dieser Art ist der als Führung für den verlängerten Gelenkbolzen der Teilschalen dienende Steg eines Führungsflansches als radial angeordnete Lasche ausgebildet, die einen radialen nach außen offenen Schlitz aufweist. Die Führung des Spannhebel-Gelenkbolzens erfolgt innerhalb eines in einem weiteren Steg des Führungsflansches vorgesehenen zweiten Schlitzes, der einen radialen Abschnitt und einen Umfangsabschnitt aufweist. Wenn die Kupplung geschlossen werden soll, muß das verlängerte Ende des Gelenkbolzens der Teilschalen in den radialen Schlitz eingeführt werden. Gleichzeitig muß der Spannhebel-Gelenkbolzen innerhalb des zweiten Schlitzes verschoben werden. Dies erfordert eine umständliche Handhabung.

Bei einer weiteren bekannten Schlauchkupplung gemäß DE-U-83 30 160 mit den gattungsgemäßen Merkmalen ist das verlängerte ende des Gelenkbolzens der Teilschale durch eine Bohrung eines am Anschlußstutzen befestigten Steges geführt. Er hat weder in radialer Richtung noch in Umfangsrichtung Spiel. Der Spannhebel-Gelenkbolzen greift in der Schließstellung in einen in Umfangsrichtung offenen Schlitz eines zweiten am Anschlußstutzen befestigter Steges ein. Während des wesentlichen Teils des Bewegungsspielraums zwischen der Offenstellung und der Schließstellung ist bei dieser bekannten Schlauchkupplung der Spannhebel-Gelenkbolzen nicht ausreichend geführt. Vor seinem Eingreifen in den offenen Schlitz kann es zu einem axialen Versatz kommen, wodurch der Schließvorgang erschwert wird, weil von Hand eine entsprechende Justierung zwischen den in Eingriff zu bringenden Teilen nachgeholt werden muß.

Hiervon ausgehend war es Aufgabe der vorliegenden Erfindung, eine Kupplung der gattungsgemäßen Art dahingehend zu verbessern, daß die zur Justierung in axialer Richtung dienenden Konstruktionsteile auf einem genügend langen Abschnitt zwischen Öffnungs- und Schließstellung geführt werden, damit das Schließen der Kupplung zuverlässig und ohne Schwierigkeiten vorgenommen werden kann.

Zur Lösung dieser Aufgabe wird bei einer gattungsgemäßen Kupplung erfindungsgemäß vorgeschlagen, daß das verlängerte Ende des Spannhebel-Gelenkbolzens im Bereich seiner Ringnut auf der radial außen liegenden Stirnfläche des Führungsflansches geführt ist und daß die im Bereich des Steges als Durchtritt für den Gelenkbolzen vorgesehene Aussparung ein sich in radialer Richtung erstreckendes Langloch ist.

Durch die beanspruchten Merkmale wird erreicht, daß eine Führung zwischen dem verlängerten Gelenkbolzen des Spannhebels und der mit ihm verbundenen Teilschale einerseits und dem Anschlußstutzen bzw. dem Führungsflansch andererseits bereits lange vor Erreichen der Schließstellung vorhanden ist. Das Zusammenwirken zwischen dem Führungsflansch und dem verlängerten Gelenkbolzen beginnt bereits zu einem Zeitpunkt, zu dem dieser noch keine in Umfangsrichtung wirksamen Kräfte zu übertragen hat und somit in seiner Beweglichkeit nicht beeinträchtigt ist.

Es ist vorteilhaft, wenn zwischen den Teilschalen bzw. ihren Halteflanschen einerseits und dem Anschlußstutzen andererseits auch die Möglichkeit eines radialen Bewegungsausgleiches aufgrund eines entsprechend bemessenen Spiels vorhanden ist. Insbesondere bei Schlauchkupplungen ist es dann gewährleistet, daß sich die Antriebskräfte über den Umfang möglichst gleichmäßig verteilen. Da jedoch bei der bekannten Ausführung der Kupplung gemäß DE-U-8330 160 der zweite Steg einen im Umfangsrichtung offenen Schlitz hat, konnte ein Spiel in radialer Richtung nicht vorgesehen werden, weil dies das Einführen des verlängerten Gelenkbolzen bzw. seiner Ringnut in den Schlitz der Aussparung noch weiter erschwert hätte. Bei der erfindungsgemäß ausgebildeten Rohrkupplung ist es jetzt jedoch möglich, daß die im ersten Steg als Durchtritt für den Gelenkbolzen vorgesehene Aussparung ein sich in radialer Richtung erstreckendes Langloch ist, denn trotz des durch das Langloch möglichen radialen Spiels kann die Führung zwischen dem verlängerten Gelenkbolzen und dem Führungsflansch beibehalten werden.

Um beim Schließen der Rohrkupplung den Teil schalenfür die Schließstellung eine definitive Position zu geben, wird erfindungsgemäß weiterhin vorgeschlagen, daß der Führungsflansch einen sich zumindest angenähert radial nach außen erstreckenden Vorsprung aufweist, der in Schließstellung der Kupplung als in Umfangsrichtung wirkender Endanschlag für den Gelenkbolzen dient. In dieser Funktion ersetzt der Vorsprung den Boden bzw. das Ende des in Umfangsrichtung verlaufenden Schlitzes am zweiten Steg bei der bekannten Kupplungsausführung.

Es ist aus mehreren Gründen zweckmäßig, einen derartigen Endanschlag nicht nur an einer Seite, sondern auch an der anderen Seite der Teil schalen vorzusehen. Dies ist erfindungsgemäß möglich, wenn an der dem Führungsflansch gegenüberliegenden Seite der jeweils innere der sich überlappenden Halteflansche der Teilschalen so bemessen ist, daß er auf dem verlängerten Gelenkbolzen zur Auflage kommt. Somit können sich die Teilschalen an der einen Seite über die Verlängerung des Gelenkbolzens und an der anderen Seite über die im Überlappungsbereich entsprechend bemessenen Halteflansche in Umfangrichtung abstützen, wenn die Schließstellung erreicht ist.

Durch die Ausbildung des in Umfangsrichtung wirksamen Endanschlages im Überlappungsbereich der an dieser Seite befindlichen Halteflansche ergibt sich noch ein weiterer Vorteil, wenn die Halteflansche der Teilschalen im Überlappungsbereich mit zur Durchführung eines Sicherungsstiftes dienenden und miteinander fluchtenden Bohrungen versehen sind. Die erfindungsgemäß bewirkte Justierung der Endlage bzw. Schließstellung gewährleistet, daß diese Bohrungen sich in Schließstellung genau decken und das Einführen des Sicherungsstiftes nicht erschwert wird.

Nachfolgend wird eine bevorzugte Ausführungsform der Erfindung anhand einer Zeichnung näher beschrieben.

Im einzelnen zeigen:

Fig. 1 die Seitenansicht einer Rohrkupplung, teilweise als Schnitt;

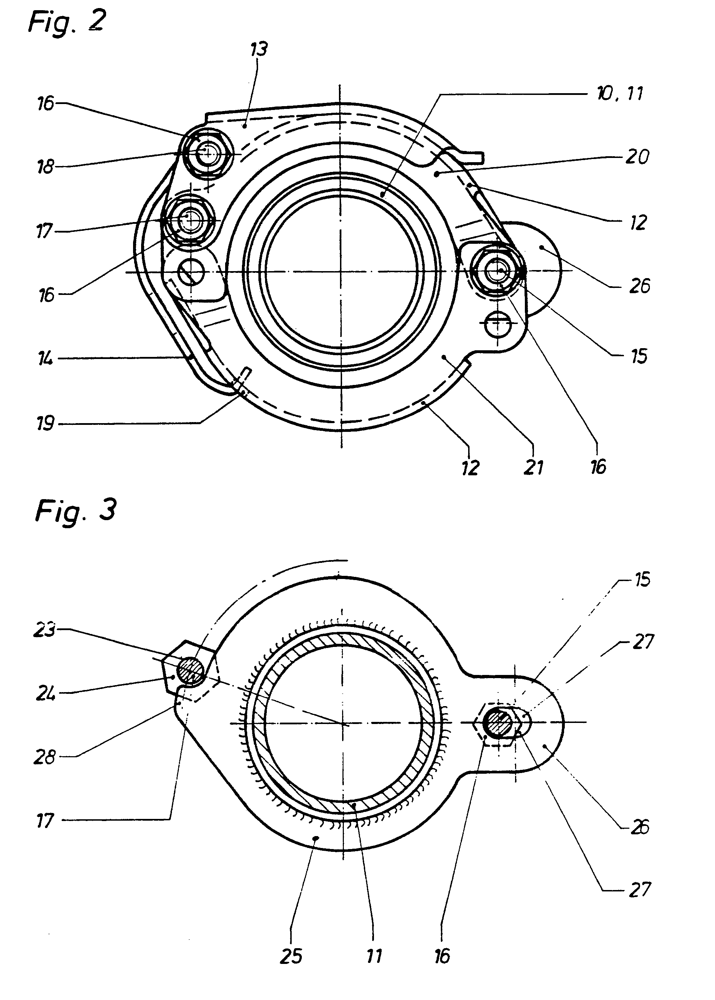

Fig. 2 eine Ansicht der Rohrkupplung, gesehen in Richtung der Längsmittelachse;

Fig. 3 einen Schnitt entlang der Linie III - III in Fig. 1.

Die dargestellte Kupplung ist eine Schlauchkupplung, deren zentraler Teil aus einer Tülle 10 und einem zu dieser koaxialen Anschlußstutzen 11 besteht. Zum Festklemmen des Schlauches auf der Tülle dienen zwei Teilschalen 12 sowie ein Verschluß, der aus einem Spannhebel 13 und einer Feder 14 gebildet ist.

Die beiden Teilschalen 12 sind an ihrem einen Ende durch einen Gelenkbolzen 15 gelenkig miteinander verbunden, der an den Enden mit Hilfe von Muttern 16 verschraubt ist. Der Spannhebel 13 ist mittels eines weiteren Gelenkbolzens 17 im Endbereich der einen Teilschale 12 befestigt, während ein nächster Gelenkbolzen 18 zur Befestigung des einen Endes der Feder 14 dient. Mit ihrem anderen Ende ist die Feder 14 in einer Aussparung 19 der einen Teilschale 12 eingehakt. Auch die Gelenkbolzen 17 und 18 sind jeweils mit Hilfe von Muttern 16 verschraubt.

Die Teilschalen 12 haben an ihren beiden Seiten jeweils einen nach innen ragenden Halteflansch 20 bzw. 21. Die Halteflansche 20 gehören zur oberen Teilschale 12, während die Halteflansche 21 der unteren Teilschale 12 zuzuordnen sind. Die Halteflansche 20 und 21 dienen zum Andrücken eines hier nicht dargestellen Schlauches an die Tülle 10.

Der Gelenkbolzen 17 ist an seiner dem Anschlußstutzen 11 zugewandten Seite verlängert und bildet dort eine Ringnut 23 und einen ebenfalls aus einem Sechskant bestehenden Führungskopf 24. Auf den Anschlußstutzen 12 ist ein Führungsflansch 25 in Form eines um den Umfang geschlossen verlaufenden Ringes aufgeschweißt. Der Führungsflansch 25 hat in seinem dem Gelenkbolzen 15 zugeordneten Bereich einen radial nach außen hervorstehenden Steg 26 mit einem sich in radialer Richtung erstreckenden Langloch 27. In diesem sind der Gelenkbolzen 15 und damit die Teilschalen 12 in radialer Richtung beweglich.

Die Form des Führungsflansches 25 ist so gewählt, daß er zumindest im letzten Bereich der Schließbewegung bis zum Erreichen der in der Zeichnung dargestellten Schließstellung in die Ringnut 23 eingreift. Dabei kann gleichzeitig eine axiale und eine radiale Führung erfolgen. Der Führungsflansch 25 hat an einer der Schließstellung entsprechenden Stelle einen sich radial nach außen erstreckenden und als Endanschlag dienenden Vorsprung 28, auf dem der Gelenkbolzen 17 mit der Ringnut 23 zur Auflage kommt, wenn die Schließstellung erreicht ist. Der Führungsflansch 25 kann so bemessen sein, daß dieser Endanschlag im wesentlichen nur in Umfangsrichtung wirksam ist, während in radialer Richtung noch etwas Spiel vorhanden ist, um eine Selbstjustierung zwischen den Teilschalen 12 und der Tülle 10 bzw. dem Anschlußstutzen 11 zu ermöglichen.

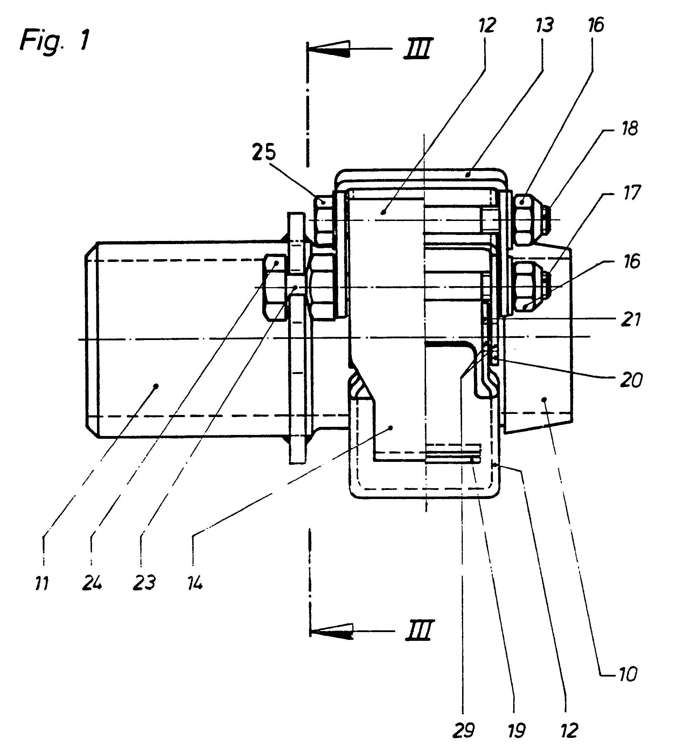

Wie Figur 1 erkennen läßt, überlappen sich die Halteflansche 20 und 21 der beiden Teilschalen 12 im Bereich des Gelenkbolzens 17 in einem solchen Maße, daß der innere Halteflansch 21 der unteren Teilschale 12 in Schließstellung der Kupplung auf dem Gelenkbolzen 17 zur Auflage kommt. Dies bedeutet, daß ein definitives Auflager für die Schließstellung nicht nur im Bereich des Vorsprungs 28, sondern auch an der gegenüberliegenden Seite der Teilschalen 12 vorhanden ist, so daß eine entsprechende Gleichmäßigkeit der Auflage gewährleistet ist.

Die Halteflansche 20 und 21 haben unterhalb des Gelenkbolzens 17 jeweils eine Bohrung 29, die zum Durchführen eines hier nicht dargestellten Sicherungsstiftes dient. Die Schaffung einer Auflage für den Halteflansch 21 der unteren Teilschale 12 im Überlappungsbereich gewährleistet, daß sich die Bohrungen 29 in Schließstellung immer genau decken und ein Sicherungsstift ohne Schwierigkeiten eingeführt werden kann.

**Patentansprüche**

1. Schlauch- oder Rohrkupplung mit jeweils durch einen Gelenkbolzen (15) gelenkig miteinander verbundenen Teilschalen (12), die mit nach innen ragenden seitlichen Halteflanschen (20, 21) versehen und durch einen aus Spannhebel (13) und Feder (14) gebildeten Verschluß verschließbar sind, wobei der Spannhebel (13) durch einen weiteren Gelenkbolzen (17) an einer der Teilschalen (12) befestigt ist, mit einem Führungsflansch (25) in Form eines geschlossenen Rings, der mit einem Anschlußstutzen (11) verbunden und neben den Teilschalen (12) angeordnet ist und einen zumindest angenähert radialen Steg (26) aufweist, der von dem die Teilschalen (12) verbindenden Gelenkbolze (15) durchsetzt ist, und der eine sich in Umfangsrichtung estreckende äußere Führung für ein verlängertes Ende (23, 24) des den Spannhebel (13) mit der einen Teilschale (12) verbindenden Gelenkbolzens (17) bildet, wobei dieses Gelenkbolzenende (23, 24) einen eine Ringnut (23) begrezenden Führungskopf aufweist und der Führungsflansch (25) mindestens 90° vor Erreichen der Schließstellung in die Ringnut (23) eingreift,

dadurch gekennzeichnet,

daß das verlängerte Ende des Gelenkbolzens (17) im Bereich seiner Ringnut (23) auf der radial außen liegenden Stirnfläche des Führungsflansches (25) geführt ist und daß die im Bereich des Steges (26) als Durchtritt für den Gelenkbolzen (15) vorgesehene Aussparung ein sich in radialer Richtung erstreckendes Langloch (27) ist.

2. Kupplung nach Anspruch 1,

dadurch gekennzeichnet,

daß der Führungsflansch (25) einen sich zumindest angenähert radial nach außen erstreckenden Vorsprung (28) aufweist, der in Schließstellung der Kupplung als in Umfangsrichtung wirkender Endanschlag für den Gelenkbolzen (17) bzw. seine Verlängerung dient.

3. Kupplung nach Anspruch 1 oder 2,

dadurch gekennzeichnet,

daß sich an der dem Führungsflansch (25) gegenüberliegenden Seite der jeweils innere der sich überlappenden Halteflansche (21) der Teilschalen (12) so bemessen ist, daß er auf dem verlängerten Gelenkbolzen (17) zur Auflage kommt.

4. Kupplung nach Anspruch 3,

dadurch gekennzeichnet,

daß die Halteflansche (20, 21) der Teilschalen (12) im Überlappungsbereich mit zum Durchführen eines Sicherungsstiftes dienenden und miteinander fluchtenden Bohrungen (29) versehen sind.

## Claims

1. Hose or pipe coupling, with part-shells (12) which are in each case connected pivotally to one another by a hinge bolt (15) and which are provided with inwardly projecting lateral holding flanges (20, 21) and are lockable by a lock formed of a clamping lever (13) and a spring (14), the clamping lever (13) being secured on one of the part-shells (12) by a further hinge bolt (17), with a guide flange (25) in the form of a closed ring which is connected to a connecting union (11) and is arranged adjacent the part-shells (12) and comprises an at least approximately radial nose (26), through which extends the hinge bolt (15) connecting the part-shells (12) and which forms a circumferentially disposed outer guide for an extension end (23, 24) of the hinge bolt (17) connecting the clamping lever (13) to one part-shell (12), this hinge pin end (23, 24) comprising a guide head (24) bounding an annular groove (23), and the guide flange (25) engaging in the annular groove (23) at least 90° before the closed position is reached, characterised in that the extension end of the hinge bolt (17) is guided in the region of its annular groove (23) on the radially externally situated face of the guide flange (25), and that the aperture which is provided in the region of the nose (26) for the through passage of the hinge bolt (15) is an oblong hole (27) which is disposed in the radial direction.

2. Coupling according to claim 1, characterised in that the guide flange (25) has a projection (28) which extends at least approximately radially outwardly, and which in the closed position of the coupling serves as a circumferentially effective end stop for the hinge bolt (17) or rather the bolt extension.

3. Coupling according to claim 1 or 2, characterised in that at the side opposite from the guide flange (25) the inner in each case of the mutually overlapping holding flanges (21) of the part-shells (12) is so dimensioned that it comes to abut on the extension of the hinge bolt (17).

4. Coupling according to claim 3, characterised in that the holding flanges (20, 21) of the partshells (12) are provided in the region of overlap with holes (29) which are in alignment with one another and which serve to receive a securing pin inserted therethrough.

## Revendications

1. Raccord pour tuyau ou tube avec des demi-coquilles (12), reliées l'une à l'autre à articulation respectivement par un axe d'articulation (15), qui sont munies de flasques de maintien (20, 21) latérales en saillie vers l'intérieur et peuvent être fermées par une fermeture formée par un levier de serrage (13) et un ressort (14), le levier de serrage (13) étant fixé à l'une des demi-coquilles (12) par un autre axe d'articulation (17), avec une flasque de guidage (25) sous forme d'une bague fermée qui est reliée à un raccord (11) et est disposée à côté des demi-coquilles (12) et présente une traverse (26) au moins approximativement radiale qui est traversée par l'axe d'articulation (15) reliant les demi-coquilles (12) et qui forme un guidage extérieur s'étendent en direction périphérique pour une extrémité prolongée (23, 24) de l'axe d'articulation (17) reliant le levier de serrage (13) à l'une des demi-coquilles (12), cette extrémité (23, 24) d'axe d'articulation présentant une tête de guidage (24) limitant une rainure annulaire (23) et la flasque de guidage (25) pénétrant dans la rainure annulaire (23) au moins 90° avant d'atteindre la position de fermeture, caractérisé par le fait que l'extrémité prolongée de l'axe d'articulation (17) est guidée, dans la région de sa gorge annulaire (23), sur la face frontale radiale, se trouvant à l'extérieur, de la flasque de guidage (25) et que l'évidement prévu dans la région de la traverse (26) pour la traversée de l'axe d'articulation (15) est constitué par un trou oblong (27) s'étendant en direction radiale.

2. Raccord selon la revendication 1, caractérisé par le fait que la flasque de guidage (25) présente une saillie (28) s'étendent vers l'extérieur au moins approximativement radialement, qui sert, en position de fermeture du raccord, de butée d'extrémité agissant en direction périphérique pour l'axe d'articulation (17) ou son prolongement.

3. Raccord selon la recvendication 1 ou 2, caractérisé par le fait que la flasque intérieure (21) respectivement des flaques de maintien des demi-coquilles (12) qui se recouvrent a, sur sa face opposée à la flasque de guidage, une dimension telle qu'elle vient en appui sur laxe d'articulation prolongé.

4. Raccord selon la revendication 3, caractérisé par le fait que les flasques de maintien (20, 21) des demi-coquilles (12) sont munies, dans la région de recouvrement, d'alésages (29) servant au passage d'une broche de sécurité et alignés entre eux.

# Fig. 1

**Fig. 2**

**Fig. 3**